Europäisches Patentamt

(19) European Patent Office

Office européen des brevets

(11) Publication number: **0 300 295 B1**

## (12)     EUROPEAN PATENT SPECIFICATION

(45) Date of publication of patent specification: **08.01.92**     (51) Int. Cl.⁵: **D06F 35/00**, D06F 39/08

(21) Application number: **88110968.0**

(22) Date of filing: **08.07.88**

(54) **A procedure for washing clothes, fabrics and similar materials and a machine to practice said procedure.**

(30) Priority: **17.07.87 ES 8702102**
        **13.05.88 ES 8801493**

(43) Date of publication of application:
**25.01.89 Bulletin 89/04**

(45) Publication of the grant of the patent:
**08.01.92 Bulletin 92/02**

(84) Designated Contracting States:
**AT BE CH DE FR GB GR IT LI NL SE**

(56) References cited:
**FR-A- 1 033 025**
**FR-A- 1 364 698**
**US-A- 2 432 766**

(73) Proprietor: **IBERIA, S.A.**
**Chalet Vida**
**Ransol (Canillo)(AD)**

(72) Inventor: **de Palau, Manuel Fabregas**
**Chalet Vida**
**Ransol (Canillo)(AD)**

(74) Representative: **Körner, Ekkehard, Dipl.-Ing.**
**Patentanwalt Maximilianstrasse 58**
**W-8000 München 22(DE)**

## Description

This patent refers to a method of washing clothes, fabrics and similar materials, and a machine for carrying out the method.

The washing process for laundry, executed in washing machines which are generally automatic, is well known. That process consists in a pre-washing stage, with the addition of water and the proper detergents or, if necessary, other additives. After this first stage, a discharge of the dirty liquid and then a main washing phase take place. The following step is normally a rinsing of the items with water with an eventual addition of other additives such as softeners, etc. In this stage at least one discharge phase of the remaining water and finally drying by spinning the drum take place. However this last step cannot be executed in case that the user of the machine is not present, so as to be able to take the items out of the washing machine. In this case, the spin-drying is not effected and the items remain inside the drum with a certain amount of clean water which prevents the laundry items from being wrinkled until the user proceeds to discharge the water and to remove the washed items. Also the final spin-drying cycle is not executed when washing delicate clothes which could suffer from eventual damage from the centrifugal forces created in this final spinning phase of the process.

Another method used in washing machines with several washing programs is also known, in which a recirculation of the washing liquid is effected, in general through same pump, which drains the washing liquid at the end of the process. This recirculation, after having passed through an associated filter, brings that liquid back into the surrounding tub which contains the rotating drum, with a collector or small reservoir being disposed between the bottom of the aforementioned tub and the pump. In this procedure, in certain operations or phases the abovementioned recirculation circuit starts to operate, mainly to obtain a reduction of consumption of water and electric energy. It is necessary to point out that in this procedure the same pump is used for both the recirculation phase and the discharge of the dirty liquid resulting from the washing operations. In that case, the aforementioned pump is combined with electrovalves selectively activated by the machine programmer so as to let the corresponding liquid flow in the aforementioned way or to let it be discharged from the machine.

In both processes, which are well known, executed in the conventional washing machines, a complete washing process according to the stages mentioned above lasts from 1.5 hours up to 2 hours.

From US-A-2 432 766 a method of washing clothes is known contemplating the utilization in combination of two forces, one force being gravity or cenrifugal force and acting uniformly throughout the laundry operations and the other force being of an alternating character so that it becomes effective by reason of the differences in specific gravity between the clothes and water. This method is effected by a washing machine, wherein centrifugal force operates throughout the washing, rinsing and extracting operations to remove the water from the clothes centrifugally and that force which is alternating in character also operates throughout the washing, rinsing and extracting phases to separate the clothes from the water by taking advance of the different inertia effects of the clothes and water. In this washing machine, having the features of the preamble of claim 2, the liquid intake duct terminates in a spray nozzle ejecting a spray jet into the drum from the outside thereof through an opening provided in one of the end walls of said drum.

From FR-A-1 033 025 an apparatus for dosing detergents in a washing machine is known, comprising two auxiliary containers for receiving detergents designated to be used during the pre-washing and main washing stages, respectively, and being connected to water inlet means and having outlet pipes connected to the tub of the washing machine. In said outlet pipes, valves are disposed which are controlled by a program unit of the machine.

It is the object of the invention to provide a method as set forth in the preamble of claim 1 allowing a reduction of the total operation time and of water and energy consumed in washing laundry. Furthermore, it is an object of the invention to provide a washing machine as set forth above which is suitable for carrying out the method.

These objects are attained by the characterizing features of claims 1 and 2, respectively. Preferred embodiments of the washing machine are subject matter of the sub-claims.

The method of washing clothes, fabrics and similar materials, which is the subject matter of this invention, corresponds to a method which includes a pre-washing phase, with the addition of water and the proper detergents, a discharge phase of the used liquid and a washing phase, with addition of water and detergents, then a discharge phase of the used liquid, and thereafter eventually another washing phase with the respective addition of other additives. The next steps are a rinsing cycle with water and eventually additives, like softeners, etc, in which at least one discharge phase of the used liquid and eventually a final spin-drying cycle of the washed laundry items through a process of centrifugation. According to the invention, this method has a specific characteristic according to which the laundry items are subject to a centrifugal process in the pre-washing phase and of another centrifugation process in the rinsing phase.

The application of the method that is the subject matter of this invention gives rise to the following advantages, with respect to the above-mentioned known methods: Firstly the laundry items are washed at a minimum time, energy and water consumption, with the consequent economic benefits to the user of the washing machine that performs the method. Secondly, according to the aforementioned method, the washed laundry items are free of the detergents used in the typical washing process, because those are taken out from the items through the energetic action of the centrifugal forces caused by centrifugation in the rinsing phase. The flow caused by the pump during the final discharge of the dirty liquid removes the detergents once they have been detached from the washed items. Finally, the energetic action of the centrifugal forces, caused by centrifugation in the pre-washing phase, greatly activates the circulation of the detergents with the corresponding water, giving rise to an intense flow thereof that penetrates into the washing items, removing the dirt therefrom.

According to this invention, the execution of the method of washing laundry items i.e., clothes, fabrics and similar items, give the above-mentioned advantages together with many others which will be easily understood by an expert in the matter, when regarding the embodiment of the forementioned method. This will be particularly explained to facilitate the understanding of the characteristics already described. Other details of its execution will be explained as well.

One can assume a washing machine that is suitable for executing the method according to the invention, for which such a machine is provided, apart from the conventional electrovalve which is included in the branch, connected both to the water supply and to the compartments temporarily containing the washing agents, with another electrovalve inserted into a conduit linked to the aforementioned compartments for the washing agents. This conduit terminates in a diffusor which opens into the machine drum. Likewise this machine has other conventional elements, such as a surrounding tub, which contains the aforementioned drum and has a door for loading and unloading the items to be washed; an outlet for the used liquids, generally activated by a pump, which pass through a filter; mechanical and electrical devices for driving the drum and means for rotating same; heaters for the washing liquids; programming mechanisms and other conventional elements of these kinds of machines. The drum's axis can be horizontal, having the door in the front or in the upper part of the machine (in this case another lid in the circular wall of the drum is provided), or vertical.

Finally, the washing machine which is subject matter of this description can also be provided with a modification which does not affect the essence of the procedure described here. Apart from the conventional water inlet through a branch having an electrovalve and one or several compartments to temporarily contain the washing agents and leading into the surrounding tub inside of which the rotating drum is situated, the modification consists of a pipe connected to the water supply and comprising another electrovalve which is connected to a diffusor, terminating inside the drum. In this case, such a machine correspondes to the recirculation type, with a filter, a collector or small reservoir disposed at the bottom of the surrounding tub and a pump, usually an electric pump, which can or cannot be the same that drains the treating liquids to the outside.

When the machine operates, the method starts with a pre-washing phase of the laundry items, for approximately 2 to 3 minutes, during which the items are then subject to centrifugation; this is obtained by an appropriate spinning speed of the drum, by means of a transmission and an associated electromotor. During this phase, in which such centrifugation takes place, the items are firmly stuck to the drum's perforate internal walls and at the same time water enters from the respective conduit and the aforementioned diffusor, inside the drum. Such water already contains the proper detergents, penetrates into the laundry items and leaves the drum through the perforation, being properly taken away and remaining out of the reach of the spinning drum, so that it is not soaked by the treated items again. Such liquid may then be recirculated to the diffusor.

The centrifugation which takes place during the prewashing phase effects an energetic and active initial washing of the laundry which gets soaked very much and very often, all that taking place in a very limited period of time, whereas a pre-washing phase in a conventional procedure lasts about 15 minutes.

The treated laundry is then subject to a phase of conventional washing, but in a shorter time, which is from 20 to 40 minutes less than in a conventional washing process which lasts about 60 minutes or more. It is also possible, if necessary, to discharge the used liquid of the pre-washing phase, before the main washing-phase is started and, in this case, water, detergents and other additives can be added.

Immediately, and previously to the water discharging phase, the rinsing phase takes place, and the treated laundry is subject of a centrifugal process, in which the detergents and/or additives added previously are removed from the drum through the energetical action of the centrifugal force with a relatively high speed of the drum in this rinsing phase. Due to that centrifugation the laundry gets rid of the aforementioned liquid, detergents and the like and is completely clean. The rinsing phase can be subject of one or several discharge steps of the used liquid and, in this case, of one or more clean water intake steps from the water supply, which contributes to a perfect final rinsing. Such rinsing, according to the invention, lasts about 3 to 4 minutes, whereas a conventional rinsing phase lasts about 15 minutes or more.

If the treated laundry is intended to be rather dry, it is possible to provide a final wringing to take all remaining water off, as it is effected in the conventional methods, as explained above.

In this method a heating of the corresponding liquid is also possible, in a conventional way and in case of the laundry being allowed to be treated with warm water.

When carrying out the method described in this example, considerable amounts of energy, water and time (from 30% to 40%) as well as detergents (30% approximately) are saved.

Laundry washing machines which are generally automatic are well known. Those are composed of a stationary tub and a rotating drum where the laundry is submerged in the washing liquid. The water is supplied by a water intake, where detergents and other additives, such as bleaching agents and softeners, are added. Water usually is preheated by the machine itself during the washing phase. After the washing phase a rinsing phase and a first drying phase by spinning the drum takes place. All these phases are carried out cyclically, controlled by a program unit which effects timing and operation of the drum driving motor, and of the automatic valves controlling the water and washing liquid flows.

In such laundry machines, actually found on the market, several inconveniences are apparent: on one hand the large amount of water needed for the operation,and on the other hand the large amount of electric energy needed for heating the water and for the operation of the drum driving motor, due to the long periods required by the operation phases included in the total cycle of the washing process. Likewise, the physical structure of many machines which can be found on the market is complex, therefore the structure is subject to breakdowns, which has unfavourable effects on the costs of manufacture.

The laundry washing machine of this invention is free of the above mentioned inconveniences and provides a practical solution for washing laundry and the like with a minimum energy and water consumption, and a maximum functional effectiveness. The amount of water used for the washing process is reduced to a minimum , due to the exact water levels which contain the laundry inside the drum. In its upper part, the water attains a level in which the laundry is completely submerged and exposed to the washing process, whereas in the lower portion of the drum a certain quantity of this water remains temporarily in an interior collector extending from the tub. The capacity of this collector is actually equivalent to that of a supplementary tank placed in the water intake piping to the drum. When properly combining the circulation of the water flows, in such supplementary container and towards the tank collector , only the necessary amount of water for the functions in each process phase is required. In this way, water consumption, electric energy needed for heating, running and mobility of such water in all the operation phases taking part in the washing process are saved.

To continue with the saving of energy and water, it is important to point out that even though the water volume contained inside the washing machine in a given time can be somewhat higher than the water volume existing in a conventional laundry washing machine, the rationality of the operation of the new machine assures that in the whole process the water consumption is lower, the water consumption being the amount of water flowing through a volume meter in a given time. In the same way, the amount of electric energy used is lower during the machine performance, because of the lower power consumption of the electromechanical devices (pump, valves and motor) that are components of the new machine structure. Due to the new functional configuration, detergents and additives are saved as well.

In order to explain the invention, reference is made to the drawings accompanying this description and representing an embodiment of the machine for washing clothes, fabrics and similar items, according to the principles of the claims.

In the drawings:

Fig. 1 represents schematically all the components and devices making up the operative structure of the new washing machine, at the moment the water attains its maximum level, corresponding to the immersion of the laundry items contained in the rotating drum.

Fig. 2 shows the machine when the water has attained the lower predetermined level, occupying the characteristic collector of the tub enclosing the drum which rotates without being immersed in the water.

The elements indicated by reference numerals in the drawings correspond to the following parts:

By intake electrovalves 1F and 1C, cold water and hot water, respectively, is supplied to the washing machine. Cold water is supplied directly from the water mains whereas hot water is supplied via a heating device (not shown) connected to the washing machine, each one via conduits 21.

Valves 1F and 1C via conduits 26 lead to compartments 2, 3 and 4 which are adapted to be provided with detergents in powder of liquid form, bleaching agents and softeners or other additives used in the washing process to improve and promote the properties of the items to be washed. In the outlets 23 of said compartments 2, 3 and 4 an electrovalve arrangement 5 is provided, the outlet of which is connected to a tank 8 via a conduit 24. Said tank 8 is a characteristic element of the laundry washing machine of the present invention. Said tank 8 has a specific predetermined volume and is provided with intake electrovalves 6F and 6C for cold and hot water, respectively, said valves 6F, 6C being independent from the valves 1F, 1C mentioned above and being connected via conduits 22 to the water mains and a heating device (not shown).

In the outlet of tank 8, an electrovalve 9 is situated being connected to a pipe 10 extending into a drum 7 rotatably disposed within a stationary tub 25 of the washing machine. Pipe 10 terminates in a diffusor 11 disposed in the center part of the drum 7.

In the drawings, some laundry items 18 are loaded in the drum 7, sticking at the circumferential walls of the drum 7 due to the rotational movement of the drum 7.

To the lower part of the stationary tub 25 a collector 20 is connected forming an extension of the tub 25. Said collector 20 has the shape of a truncated cone, the volume of which is equal to the volume of aforementioned tank 8. At the bottom end of said collector 20 an outlet conduit 19 is connected in which an outlet electrovalve 14 is disposed, the outlet of which is connected via a conduit 15 to a pump 16 in turn connected to a discharge conduit 17 for draining the tub 25 and, eventually, recirculating the washing liquid to the tank via a branch conduit and electrovalve means (not shown for simplicity).

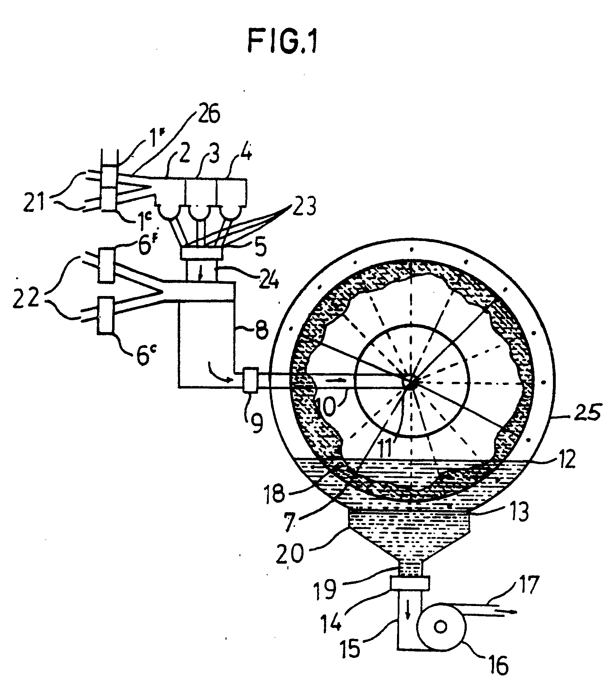

A predetermined upper liquid level is indicated at 12 in Fig. 1, showing a condition in which the rotating drum 7 is partially submerged in the washing liquid, so that upon rotation of the drum 7 the laundry intems 18 are repeatedly taken into and out of the washing liquid, as in a conventional main washing phase.

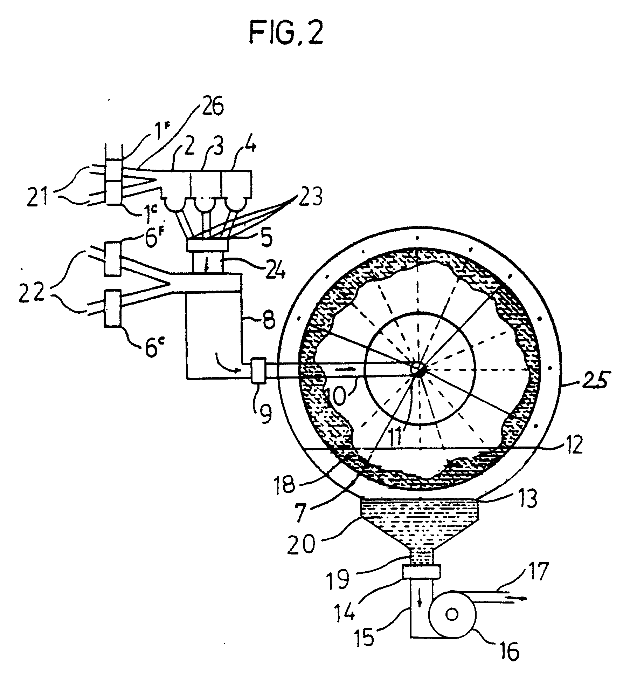

A predetermined lower liquid level is indicated at 13 in Fig. 2 where the washing liquid occupies the space in the collector 20 only. In this condition, no portion of the drum 7 is submerged in the washing liquid so that a centrifugation phase for dewatering the laundry may be effected, eventually followed by another spraying cycle using the washing liquid recirculated from the collector 20 to the tank 8, as mentioned above, upon proper setting of the electrovalve means (not shown) disposed at the outlet of the pump 16.

By means of tank 8 provided with separate intake valves 6F and 6C, fresh cold and hot water, respectively, may be supplied independently of the supply of detergents, additives and the like, from compartments 2, 3 and 4. This enables the machine to be operated in a pre-washing phase using a minimum amount of water only, without affecting any detergents, additives and the like comprised in said compartment for being used in a subsequent main washing phase and any further phase following subsequently thereto.

## Claims

1. A method of washing laundry items, like clothes, fabrics and the like, involving a prewashing stage with a washing liquid of water with the addition of suitable detergents, eventually followed by a discharge phase of the used liquid, and a main washing stage with the addition of water, detergents and eventually other washing additives, followed by a rinsing stage with a rinsing liquid of water and, eventually rinsing additives, like softeners, and implementing at least the discharge of the used liquid and finally effecting, if desired, wringing of the washed items by means of centrifugation, **characterized in that** during the prewashing stage the items are subjected to a centrifugation during which the washing liquid is continuously fed into the items and passes therethrough and leaves the items, and during the rinsing stage the items are subjected to another centrifugation during which the rinsing liquid is fed to the items and passes therethrough and leaves the items, taking all detergents and eventually other washing additives away from the items.

2. Washing machine for clothes, fabrics, laundry and the like items, particularly an automatic washing machine of the domestic type, comprising a tub (25) and a drum (7) rotatably mounted therein, a duct (21,24,10) comprising water inlet means (21) for feeding water and washing liquids to said drum (7), an outlet pipe (15) connected to a drain pump (16) and provided with an outlet electrovalve (14) for controlling the discharge of liquid from said tub (25), **characterized by** the provision of an intermediate auxiliary tank (8) disposed in the duct (21,24,10) between an electrovalve arrangement (5) supplying detergents, additives, like bleaching agents, softeners and the like comprised in compartments (2,3,4) connected to said water inlet means (21) controlled by electrovalve means (1F,1C), and an electrovalve (9) controlling liquid flow from said auxiliary tank (8) to a water inlet pipe (10) in the rotating drum (7), said tub (25) being provided in its lower portion with a collector (20) increasing the capacity of the tub (25) and being connected through said outlet electrovalve (14) to said outlet pipe (15).

3. Washing machine as set forth in claim 2, characterized in that the capacity of the collector (20) is equivalent to the capacity of the auxiliary tank (8), the occupation of the collector (20) determining at least two levels (12,13) of the washing liquid in relation to the rotating drum (7) respectively, corresponding to the immersion of the items (18) in the washing liquid and to drum rotation outside the washing liquid occupying the collector (20).

4. Washing machine as set forth in claim 2, characterized in that said auxiliary tank (8) is provided with water inlet means (22) controlled by electrovalve means (6F,6C) independently of the water supply to the compartments (2,3,4).

5. Washing machine as set forth in any one of claims 2 to 4, characterized in that the capacity of the auxiliary tank (8) is sufficient to hold an amount of recirculated washing liquid so as to prevent the drum (7) from being immersed in liquid when effecting centrifugation.

6. Washing machine as set forth in any one of claims 2 to 5, characterized in that the auxiliary tank (8) is connected to the drain pipe (17) of the collector (20) by means of a recirculation branch conduit.

## Revendications

1. Procédé de lavage d'articles de linge, tels que vêtements, tissus et articles analogues, comprenant une phase de prélavage, au moyen d'un liquide de lavage constitué d'eau avec l'addition de détergents appropriés, éventuellement suivie d'une phase d'évacuation du liquide usé, et une phase de lavage principal au moyen d'un apport d'eau, de détergents, et éventuellement d'autres additifs de lavage, suivie d'une phase de rinçage au moyen d'un liquide de rinçage constitué d'eau et éventuellement de liquides de rinçage, tels que des adoucissants, cette phase comportant au moins l'évacuation du liquide usé et réalisant finalement, si cela est souhaité, un essorage des articles lavés au moyen d'une centrifugation, caractérisé en ce qu'au cours de la phase de prélavage, les articles sont soumis à une centrifugation au cours de laquelle le liquide de lavage est amené d'une manière continue aux articles et les traverse et les quitte, et en ce que, au cours de la phase de rinçage, les articles sont soumis à une autre centrifugation au cours de laquelle le liquide de rinçage est amené aux articles et les traverse et les quitte, en extrayant de ces articles tous les détergents et éventuellement les autres additifs de lavage.

2. Machine de lavage pour vêtements, tissus, articles de linge et autres articles analogues, plus particulièrement une machine de lavage automatique du type domestique, comprenant une cuve (25) et un tambour (7) monté rotatif dans cette dernière, un conduit (21, 24, 10) comprenant des moyens d'amenée d'eau (21) permettant d'envoyer de l'eau et des liquides de lavage au tambour (7), un conduit de sortie (15) raccordé à une pompe de vidange (16) et pourvu d'une électrovanne de sortie (14) permettant de commander l'évacuation du liquide hors de la cuve (25), caractérisée en ce qu'il est prévu un réservoir auxiliaire intermédiaire (8) disposé dans le conduit (21, 24, 10) entre un agencement du type électrovanne (5) amenant les détergents, additifs, agents de blanchissement, adoucissants et produits analogues contenus dans des compartiments (2, 3, 4) reliés aux moyens d'entrée d'eau (21) commandés par des moyens du type électrovanne (1F, 1C), et une électrovanne (9) commandant l'écoulement de liquide du réservoir auxiliaire (8) vers un tuyau d'entrée d'eau (10) disposé dans le tambour rotatif (7), la cuve (25) étant pourvue, dans sa partie inférieure, d'un collecteur (20) qui augmente la capacité de cette cuve (25) et qui est raccordée au conduit de sortie (15) par l'électrovanne de sortie (14).

3. Machine à laver suivant la revendication 2, caractérisée en ce que la capacité du collecteur (20) est équivalente à la capacité du réservoir auxiliaire (8), l'occupation de ce collecteur (20) déterminant au moins deux niveaux (12, 13) du liquide de lavage, par rapport au tambour rotatif (7), correspondant respectivement à l'immersion des articles (18) dans le liquide de lavage et à une rotation du tambour en dehors du liquide de lavage qui occupe le collecteur (20).

4. Machine à laver suivant la revendication 2, caractérisée en ce que le réservoir auxiliaire (8) est pourvu de moyens d'entrée d'eau (22) commandés par des moyens du type électrovanne (6F, 6C) indépendamment de l'alimentation en eau aux compartiments (2, 3, 4).

5.  Machine à laver suivant l'une quelconque des revendications 2 à 4, caractérisée en ce que la capacité du réservoir auxiliaire (8) est suffisante pour contenir une quantité de liquide de lavage recyclé de manière à empêcher le tambour (7) d'être immergé dans le liquide lorsqu'une centrifugation a lieu.

6.  Machine à laver suivant l'une quelconque des revendications 2 à 5, caractérisée en ce que le réservoir auxiliaire (8) est relié à la tuyauterie de vidange (17) du collecteur (20) au moyen d'une tuyauterie de dérivation de recyclage.

**Patentansprüche**

1.  Verfahren zum Waschen von Wäschestücken, wie Tücher, Stoffe und dgl., enthaltend einen Vorwaschgang mit einer Waschflüssigkeit aus Wasser unter Zusatz geeigneter Waschmittel, ggf. gefolgt von einer Auslaßphase der benutzten Flüssigkeit, und einen Hauptwaschgang unter Hinzufügung von Wasser, Waschmitteln und ggf. anderen Waschzusätzen, gefolgt von einem Spülgang mit einer Spülflüssigkeit aus Wasser und ggf. Spülzusätzen, wie Weichmachern, und Ausführung wenigstens des Auslasses der benutzten Flüssigkeit und schließlich, falls gewünscht, Ausführung einer Entwässerung der gewaschenen Teile durch Schleudern, **dadurch gekennzeichnet,** daß während des Vorwaschgangs die Teile einer Schleuderung unterworfen werden, während der die Waschflüssigkeit kontinuierlich in die Teile eingeleitet wird und durch sie hindurchtritt und die Teile verläßt, und während des Spülgangs die Teile einer weiteren Schleuderung unterworfen werden, während der die Spülflüssigkeit den Teilen zugeführt wird und durch sie hindurchgeht und die Teile verläßt, wobei sie alle Waschmittel und ggf. andere Waschzusätze aus den Teilen mitnimmt.

2.  Waschmaschine für Tücher, Stoffe, Wäsche und dgl. Teile, insbesondere automatische Haushaltswaschmaschine, enthaltend einen Bottich (25) und eine darin drehbar montierte Trommel (7), eine Leitung (21,24,10) mit einer Wassereinlaßeinrichtung (21) zum Zuführen von Wasser und Waschflüssigkeiten zu der Trommel (7), ein Auslaßrohr (15), das mit einer Ablaßpumpe (16) verbunden ist und mit einem Auslaßelektroventil (14) zum Steuern des Auslasses von Flüssigkeit aus dem Bottich (25) versehen ist, gekennzeichnet durch die Anwesenheit eines zwischengesetzten Hilfstanks (8), der in der Leitung (21,24,10) angeordnet ist zwischen einer Elektroventilanordnung (5), die Waschmittel, Zusätze, wie Bleichmittel, Weichmacher und dgl., zuführt, die in Abteilen (2,3,4) enthalten sind, die mit der Wassereinlaßeinrichtung (21) verbunden sind, die von Elektroventileinrichtungen (1F,1C) gesteuert werden, und einem Elektroventil (9), das die Flüssigkeitsströmung aus dem Hilfstank (8) zu einem Wassereinlaßrohr (10) in der rotierenden Trommel (7) steuert, wobei der Bottich (25) in seinem unteren Abschnitt mit einem Sammler (20) versehen ist, der die Kapazität des Bottichs (25) vergrößert und über das Auslaßelektroventil (14) mit dem Auslaßrohr (15) verbunden ist.

3.  Waschmaschine nach Anspruch 2, dadurch gekennzeichnet, daß die Kapazität des Sammlers (20) so groß wie die Kapazität des Hilfstanks (8) ist, wobei die Befüllung des Sammlers (20) wenigstens zwei Waschflüssigkeitspegel (12,13) in Bezug auf die rotierende Trommel (7) bestimmen, die dem Untertauchen der Teile (18) in die Waschflüssigkeit bzw. dem Drehen der Trommel außerhalb der im Sammler (20) befindlichen Waschflüssigkeit entsprechen.

4.  Waschmaschine nach Anspruch 2, dadurch gekennzeichnet, daß der Hilfstank (8) mit Wassereinlaßeinrichtungen (22) versehen ist, die von Elektroventileinrichtungen (6F,6C) unabhängig von der Wasserzuführung zu den Abteilen (2,3,4) gesteuert werden.

5.  Waschmaschine nach einem der Ansprüche 2 bis 4, dadurch gekennzeichnet, daß die Kapazität des Hilfstanks (8) ausreichend ist, eine solche Menge umgewälzter Waschflüssigkeit aufzunehmen, daß ein Eintauchen der Trommel (7) in die Waschflüssigkeit beim Schleudern verhindert wird.

6.  Waschmaschine nach einem der Ansprüche 2 bis 5, dadurch gekennzeichnet, daß der Hilfstank (8) mit dem Ablaßrohr (17) des Sammlers (20) mittels einer Umwälzzweigleitung verbunden ist.

# FIG.1

# FIG.2